# EUROPEAN PATENT APPLICATION

(11) **EP 1 770 366 A1**
(43) Date of publication of application: **04.04.2007**
(21) Application number: 04747945.6
(22) Date of filing: 16.07.2004
(51) Int. Cl.: G01C 21/26, G08G 1/137

(54) **MAP UPDATE SYSTEM**

(71) Applicant: MATSUSHITA ELECTRIC INDUSTRIAL CO., LTD., Osaka 571-8501 (JP)
(72) Inventor: HORIKAMI, Shugo, Matsushita Electric Ind. Co. Ltd, Osaka-shi, Osaka 540-6319 (JP)
(74) Representative: Pautex Schneider, Nicole Véronique
(86) International application number: PCT/JP2004/010582
(87) International publication number: WO 2006/008826

(57) **Abstract**

Herein disclosed is a map update system including a map server (1) in which map information created by map database information stored in a map information database (3) is hierarchized according to the area size of the map information and stored. If map information of a lower hierarchy required for an upper hierarchy or a navigation device (1) is updated, update is reported to the navigation device (10). Moreover, if the map database information is updated, map information assigned to a hierarchy in accordance with the importance of the place and building indicated by the updated portion of the map database information is updated.

## Description

### TECHNICAL FIELD OF THE INVENTION

The present invention relates to a map update system, and more particularly to a map update system for receiving map information from a delivery apparatus and updating the map information stored in a terminal apparatus.

### DESCRIPTION OF THE RELATED ART

An in-vehicle navigation apparatus is designed to set a destination point, search a travel route from a starting point or a current position to the destination point, and display a map related to the searched travel route to guide a vehicle driver to the destination point along the travel route. Therefore, map information necessary to search a travel route is constantly required to be updated. Especially, highways constructed by public investments cannot produce investment effects unless the highways come to public attention and actively utilized among users, thereby leading to the fact that such information is required to be promptly passed along.

So far has been available, as a map update system of this type, a system for transmitting the latest map information from a delivery apparatus through communication means to a navigation apparatus to have the map information stored in the navigation apparatus updated.

A drawback, however, is encountered in that communication costs become extremely expensive at the same time as map information not necessarily required is obtained in the case that the map information is delivered through the communication means resulting from the fact that data of a national map is extremely large in size in view of communication rates and communication costs.

In order to overcome the above drawback, there is provided another map update system for reducing the size of the map information data employing a devised format for the map information to be delivered, and thus realized is an electronic map with a data size in the range of several tens MB to several hundreds MB for each of local areas across Japan.

There is provided still another map update system for limiting map information to be updated to a specified area. The map update system of this type is disclosed in, for example, Japanese Patent Laying-Open Publications Nos. 2000-97716 and 2000-36097. The map update system disclosed in the Japanese Patent Laying-Open Publications No. 2000-97716 comprises a navigation apparatus and a center station including a map information storage unit and a map information transmitting unit. The navigation apparatus is firstly operated to transmit a route searching condition to the center station, and the center station is operated to search a travel route based on the latest map information stored in the map information storage unit. Map information on the searched travel route is then transmitted by the map information transmitting unit through a communication line to the navigation apparatus, and the map information stored in the navigation apparatus is updated based on the received map information.

The map update system, disclosed in the Japanese Patent Laying-Open Publications No. 2000-36097, comprises a center station having stored therein the latest map information and map management information used to manage a version of the map information, and a local station operative to communicate with the center station and update an old version of the map information with the latest map information received from the center station. The local station includes storage means for storing therein map information divided into a plurality of areas and data types and map management information used to manage a version of the map information, update condition setting means for setting a update condition used to update the map information, and map update means for receiving the map management information for each of the areas from the center station, comparing a version of the received map management information with a version of the map management information stored in the storage means in accordance with the update condition, and update the map information and the map management information if it is judged that the version of the map management information stored in the local station is older than the version of the map management information stored in the center station.

The above mentioned map update system devised to reduce the size of the map information, however, encounters another drawback in that map information not necessarily required is still obtained although the size of the map information data is reduced and communication costs are thus curtailed.

The above mentioned map update systems disclosed in the Japanese Patent Laying-Open Publications Nos. 2000-97716 and 2000-36097 encounter yet another drawback in that an important renewal event but remotely taken place such as a rebuilding of a highway on a nationwide scale, an opening of an intercity highway cannot be notified, resulting from the fact that the map information to be updated is limited to a specified area range.

The above mentioned map update system disclosed in the Japanese Patent Laying-Open Publications No. 2000-36097 encounters yet another drawback in that the map information of, for example, a remotely located area may be updated, i.e., the map information of an area necessary for the user may not be updated, and thus, the map information of no concern to a user may be unnecessarily updated if the map information is updated resulting from the fact that the above mentioned map update system compares the version of the received map management information with the version of the map management information stored in the storage means, and update the map information if it is judged that the version of the map management information stored in the local station is older than the version of the map management information stored in the center station.

In the case that the map information is updated along the route searched by the center station as disclosed in the Japanese Patent Laying-Open Publications No. 2000-97716, yet another drawback is encountered in that the information on a remotely located road through which the searched route is extending can be updated while, on the other hand, the map information cannot be updated isotropically and comprehensively resulting from the fact that the update is dependent upon the searched route, and thus the update of the map information in a direction other than the one which the destination is set is not notified to a user.

### DISCLOSURE OF THE INVENTION

The present invention is made with a view to overcoming the previously mentioned drawbacks, and it is, therefore, an object of the present invention to provide a map update system comprising a delivery apparatus for hierarchizing map information to be updated for respective areas, and thus efficiently update and deliver only the necessary map information to a terminal apparatus.

In accordance with a first aspect of the present invention, there is provided a map update system, comprising: a delivery apparatus for delivering map information created based on map database information to serve as an information source of map information indicative of a map, and a terminal apparatus for receiving said map information, in which said delivery apparatus includes map information storage means for hierarchizing and storing therein said map information in accordance with an area indicated by said map information, map information update means for updating map information stored in said map information storage means if at least a part of said map database information is updated, and update information providing means for providing update information to said terminal apparatus in accordance with a hierarchy assigned to said map information updated by said map information update means, said terminal apparatus includes receiving means for receiving map information delivered from said delivery apparatus and said update information provided by said update information providing means, and map storage means for storing therein said map information received by said receiving means.

The map update system according to the present invention thus constructed can efficiently update and deliver the necessary map information from the delivery apparatus to the terminal apparatus by, for example, providing the update information of the map information assigned to the hierarchy assigned to a wide area if the database information is updated in the wide area, but not providing the update information of the map information assigned to the hierarchy assigned to a small area if the database information is updated in the small area, resulting from the fact that the update information of the map information is provided to the terminal apparatus in accordance with a hierarchy assigned to the map information updated in the map database information.

Further, in the map update system according to the present invention, said map information may include at least a higher hierarchy to be assigned to map information indicative of a map of a whole area or a wide area in relation to said map database information, and a lower hierarchy to be assigned to map information indicative of an area contained in said map to be indicated based on said map information assigned to said higher hierarchy, and said update information providing means provides said update information to said terminal apparatus at least if said map information assigned to said higher hierarchy is updated by said map information update means.

The map update system according to the present invention thus constructed can provide important update information to ensure that important information is updated, resulting from the fact that the map update system provides update information to all of the terminal apparatuses across the nation if the map database information in a wide area is updated, for example, in such a case that an express highway extending a plurality of prefectures, is newly built.

Further, in the map update system according to the present invention, said update information providing means may provide said update information in accordance with said terminal apparatus at least if said map information assigned to said lower hierarchy is updated by said map information update means.

The map update system according to the present invention thus constructed can eliminate the needs of unnecessarily providing update information as well as unnecessarily updating map information, resulting from the fact that the map update system provides the update information in accordance with a terminal apparatus if the map database information in a specific area is updated, for example, in such a case that a local road located in local communities such as cities and towns is newly built.

In addition, the map update system according to the present invention can update map information without limitation to a specific area, resulting from the fact that the map update system updates map information in a small area around user's home, as well as update map information in a wide area remotely located from the user's home.

Further, in the map update system according to the present invention, said terminal apparatus may include update information specifying means for specifying map information assigned to said lower hierarchy so as to receive said update information at least if said specified map information is updated by said map information update means.

The map update system according to the present invention thus constructed can eliminate the needs of unnecessarily providing update information as well as unnecessarily updating map information, resulting from the fact that the map update system updates the map information specified by the terminal apparatus if the map database information in a specific area is updated, for example, in such a case that a local road located in local communities such as cities and towns is newly built.

Further, in the map update system according to the present invention, said terminal apparatus may include current position obtaining means for obtaining a current position of a moving object, target destination point setting means for setting a target destination point of said moving object, and searching means for searching a recommended route from said current position to said target destination point, said map information storage means hierarchizes and store therein said map information after having said map information hierarchized into at least said higher hierarchy and said lower hierarchy, and said searching means judges whether a version of map information assigned to said higher hierarchy is matched with a version of map information assigned to said lower hierarchy, on said searching route, and if the result of judgment is unmatched, said searching means obtains said map information assigned to said lower hierarchy from said delivery apparatus to have said map information assigned to said lower hierarchy updated.

The map update system according to the present invention thus constructed can update the accurate map information while searching a travel route, resulting from the fact that the map update system updates the map information assigned to the lower hierarchy if the travel route is searched. Further, the map update system according to the present invention can eliminate the need of unnecessarily updating map information, resulting from the fact that the map update system updates only minimum necessary map information.

Further, in the map update system according to the present invention, if at least a part of said map database information is updated, said map information update means may update map information assigned to one of hierarchies, whichever corresponds to said updated part.

The map update system according to the present invention can update only the minimum necessary map information required to be delivered, and thus eliminate the need of unnecessarily updating map information, resulting from the fact that the map update system can update only the map information assigned to the hierarchy which corresponds to a specified small area of the map database information but does not update the map information assigned to the hierarchy which corresponding to a wide area of the map database information if only the small area of the map database information is updated.

Further, in the map update system, said terminal apparatus may include update information obtaining means for obtaining update information to be used for updating said map database information, and priority level obtaining means for obtaining a priority level of said update information, and said map information update means selects map information to be updated based on said priority level of said update information if at least said map database information is updated based on said update information.

The map update system according to the present invention can efficiently update the map information, resulting from the fact that, if a feature such as a newly built road is detected by the terminal apparatus, and update information indicative of the detected feature is obtained, the map update system permit a priority level of the detected feature to be set, and update the map information in accordance with the priority level.

Further, in the map update system according to the present invention, said update information providing means may provide said update information to said terminal apparatus by means of push type media.

The map update system according to the present invention makes it possible for the terminal apparatus to detect that the map information is updated, thereby ensuring to update the necessary map information.

In accordance with a second aspect of the present invention, there is provided a map update method of updating map information created based on map database information to serve as an information source of map information indicative of a map, and delivered to a terminal apparatus, said method comprises the steps of: hierarchizing and storing therein said map information in accordance with an area indicated by said map information, updating said map information if at least a part of said map database information is updated, and providing update information to said terminal apparatus in accordance with a hierarchy assigned to said updated map information.

The map update method according to the present invention can efficiently update and deliver the necessary map information from the delivery apparatus to the terminal apparatus by, for example, providing the update information of the map information assigned to the hierarchy assigned to a wide area if the database information is updated in the wide area, but not providing the update information of the map information assigned to the hierarchy assigned to a small area if the database information is updated in the small area, resulting from the fact that the update information of the map information is provided to the terminal apparatus in accordance with a hierarchy assigned to the map information updated in the map database information.

In accordance with a third aspect of the present invention, there is provided a delivery apparatus for delivering map information created based on map database information to serve as an information source of map information indicative of a map to a terminal apparatus, comprising: map information storage means for hierarchizing and storing therein said map information in accordance with an area indicated by said map information; map information update means for updating map information stored in said map information storage means if at least a part of said map database information is updated; and update information providing means for providing update information to said terminal apparatus in accordance with a hierarchy assigned to said map information updated by said map information update means.

The delivery apparatus according to the present invention thus constructed can efficiently update and deliver the necessary map information from the delivery apparatus to the terminal apparatus by, for example, providing the update information of the map information assigned to the hierarchy assigned to a wide area if the database information is updated in the wide area, but not providing the update information of the map information assigned to the hierarchy assigned to a small area if the database information is updated in the small area, resulting from the fact that the update information of the map information is provided to the terminal apparatus in accordance with a hierarchy assigned to the map information updated in the map database information.

In accordance with a fourth aspect of the present invention, there is provided a terminal apparatus for receiving map information indicative of a map from a delivery apparatus, comprising: map storage means for hierarchizing and storing therein said map information after having said map information hierarchized into at least into a higher hierarchy and a lower hierarchy; current position obtaining means for obtaining a current position of a moving object; target destination point setting means for setting a target destination point of said moving object, and searching means for searching a recommended route from said current position to said target destination point, and in which said searching means judges whether a version of map information assigned to said higher hierarchy is matched with a version of map information assigned to said lower hierarchy, on said searching route, and if the result of judgment is unmatched, said searching means obtains said map information assigned to said lower hierarchy from said delivery apparatus to have said map information assigned to said lower hierarchy updated.

The terminal apparatus according to the present invention thus constructed can update the accurate map information while searching a travel route, resulting from the fact that the terminal apparatus updates the map information assigned to the lower hierarchy if the travel route is searched. Further, the terminal apparatus according to the present invention can eliminate the need of unnecessarily updating map information, resulting from the fact that the terminal apparatus updates only minimum necessary map information.

In accordance with a fifth aspect of the present invention, there is provided a storage medium having stored therein a program readable by a computer for delivering map information created based on map database information to serve as an information source of map information indicative of a map to a terminal apparatus to have said computer implement: a function of hierarchizing and storing therein said map information in accordance with an area indicated by said map information; a function of updating map information stored in said map information storage means if at least a part of said map database information is updated, and a function of providing update information to said terminal apparatus in accordance with a hierarchy assigned to said updated map information.

The storage medium according to the present invention thus constructed can efficiently update and deliver the necessary map information from the delivery apparatus to the terminal apparatus by, for example, providing the update information of the map information assigned to the hierarchy assigned to a wide area if the database information is updated in the wide area, but not providing the update information of the map information assigned to the hierarchy assigned to a small area if the database information is updated in the small area, resulting from the fact that the update information of the map information is provided to the terminal apparatus in accordance with a hierarchy assigned to the map information updated in the map database information.

In accordance with a sixth aspect of the present invention, there is provided a storage medium having stored therein a program readable by a computer for receiving map information indicative of a map from a delivery apparatus to have said computer implement: a function of hierarchizing and storing therein said map information after having said map information hierarchized into at least into a higher hierarchy and a lower hierarchy; a function of obtaining a current position of a moving object; a function of setting a target destination point of said moving object, a function of searching a recommended route from said current position to said target destination point, a function of judging whether a version of map information assigned to said higher hierarchy is matched with a version of map information assigned to said lower hierarchy, on said searching route, and a function of obtaining said map information assigned to said lower hierarchy from said delivery apparatus to have said map information assigned to said lower hierarchy updated if the result of judgment is unmatched.

The storage medium according to the present invention thus constructed can update the accurate map information while searching a travel route, resulting from the fact that the terminal apparatus updates the map information assigned to the lower hierarchy if the travel route is searched. Further, the storage medium according to the present invention can eliminate the need of unnecessarily updating map information, resulting from the fact that the terminal apparatus updates only minimum necessary map information.

### BRIEF DESCRIPTION OF THE DRAWINGS

The features and advantages of a map update system according to the present invention will be more clearly understood from the following description taken in conjunction with the accompanying drawings in which:
FIG. 1 is a block diagram showing a preferred embodiment of the map update system according to the present invention comprising a delivery apparatus and a terminal apparatus;
FIG. 2 is a block diagram showing a preferred embodiment of the delivery apparatus;
FIG. 3 is view explaining a relationship between a map hierarchy and a road rank in a preferred embodiment;
FIG. 4 is a block diagram showing a preferred embodiment of the terminal apparatus;
FIG. 5 is a view showing contents stored in map storage means forming part of the preferred embodiment of the terminal apparatus;
FIG. 6 is a flow chart explaining processes carried out by the preferred embodiment of the map update system of updating map information, providing update information, and delivering map information;
FIG. 7 is a view showing contents of information provided by the preferred embodiment of the map update system if the map information is updated;
FIG. 8 is a flow chart explaining processes carried out by the preferred embodiment of the map update system of searching a travel route;
FIG. 9 is a view showing a condition of map information to be updated if the travel route is searched in a preferred embodiment;
FIG. 10 is a view showing a newly added link in a preferred embodiment; and
FIG. 11 is a view explaining a condition of assigning a newly added link to a rank group.

### DESCRIPTION OF THE PREFERRED EMBODIMENTS

Preferred embodiments of the present invention will be described hereinafter with reference to the drawings.

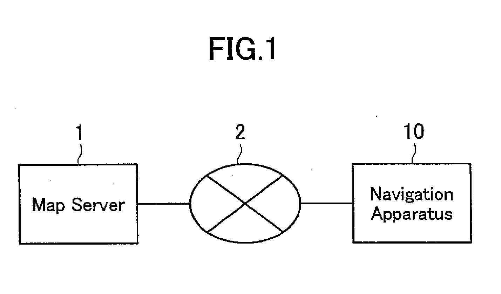

FIG. 1 through FIG. 11 are block diagrams explaining preferred embodiments of a map update system, a map update method, a delivery apparatus, a terminal apparatus, and a storage medium according to the present invention. Note, an in-vehicle navigation apparatus is assumed to be applied as the terminal apparatus, but this does not limit the present invention. As the terminal apparatus may be applied, for example, a computerized personal organizer, a personal computer, or a mobile cellular phone, in addition to the in-vehicle navigation apparatus.

Firstly, the construction of preferred embodiment of the map update system will be described hereinlater. As clearly seen from FIG. 1, the preferred embodiment of the map update system comprises a delivery apparatus constituted by a map server 1, and a terminal apparatus constituted by a navigation apparatus 10 connected with the map server 1 through a communication line 2.

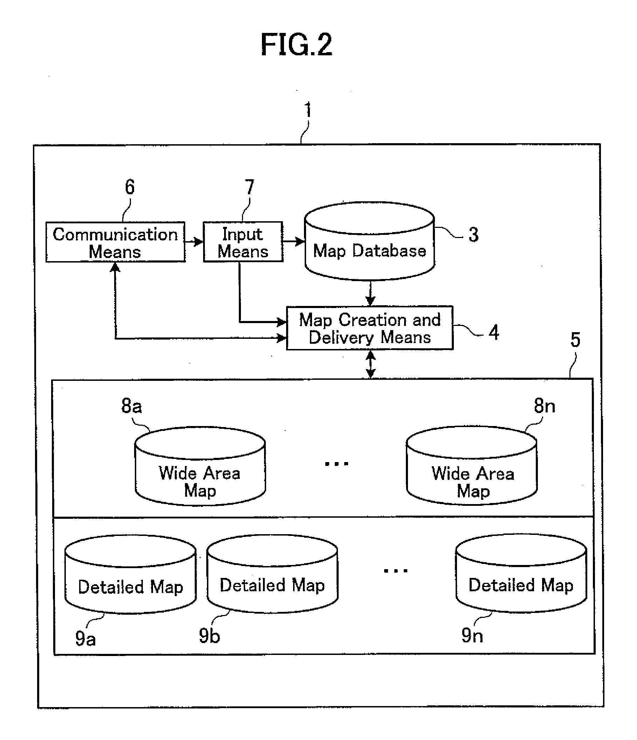

The map server 1 stores therein map information indicative of a map and deliver the map information to the navigation apparatus 10. As clearly seen from FIG. 2, the map server 1 comprises a map database 3, map creation and delivery means 4, map information storage means 5, communication means 6, and input means 7.

The map database 3 is constituted by a storage medium such as a CD (Compact Disc), a DVD (Digital Versatile Disc), or a memory card, and stores therein map database information to serve as an information source of the latest map information.

The map creation and delivery means 4 is constituted by a controller, and designed to create map information based on the map database information stored in the map database 3. The map information thus created will be hierarchically stored in the map information storage means 5.

In the concrete, the map creation and delivery means 4 creates map information divided into map information indicative of a wide area map (higher hierarchy) and map information indicative of a detailed map (lower hierarchy) based on the map database information stored in the map database 3, and have the map information storage means 5 store therein map information indicative of wide area maps 8a to 8n and map information indicative of detailed maps 9a, 9b, to 9n.

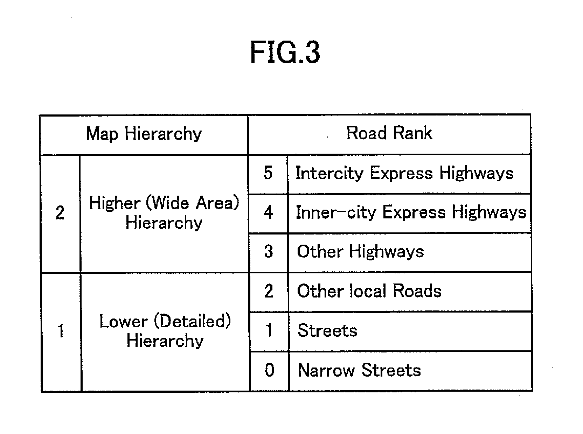

The wide area map covers wide-area features such as express highways and major highways used for intercity transport, extending across more than one prefecture, for the purpose of wide-area usage. As clearly seen from FIG. 3, the features are classified into a fifth rank group (highest priority level) including intercity express highways, a fourth rank group including inner-city express highways, and a third rank group including other highways.

Note, in the present embodiment, the wide area map 8a stored in the map information storage means 5 is assumed to be a national map of Japan, but this does not limit the present invention. It is needless to mention that the wide area maps 8a to 8n stored in the map information storage means 5 may be respectively maps of major islands such as Honshu, Shikoku, Kyushu, Hokkaido, Okinawa. It is further to be noted that the map information assigned to the higher hierarchy is low in data density, and thus relatively small in data size.

The detailed map covers features such as roads used for transport within a given local area, located in local communities such as cities and towns. As clearly seen from FIG. 3, the features are classified into a second rank group including other local roads, a first rank group including streets, and a zero rank group (lowest priority level) including narrow streets. It is to be noted that the map information assigned to the lower hierarchy is high in data density.

The map creation and delivery means 4 constitutes map information update means for updating map information stored in the map information storage means 5, and is adapted to update only the detailed maps 9a to 9n while wide area map 8a remains not updated if a part of the map database information corresponding to a road having a lower priority level assigned thereto is updated. In the present embodiment, the map information is divided into two hierarchies, but this does not limit the present invention. The map information may be divided into three or more hierarchies.

The map creation and delivery means 4 provides update information to the navigation apparatus 10 by the communication means 6 through push type media such as a dedicated message, an electronic mail, in accordance with a hierarchy assigned to the updated map information ifever the map information is updated. Further, the map creation and delivery means 4 is adapted to transmit the updated map information in response to the delivery request for the map information from the navigation apparatus 10.

In the input means 7, update information indicative of a new feature, and a priority level of the update information are inputted. The input means 7 writes the inputted update information and the inputted priority level of the update information into the map database 3.

The map creation and delivery means 4 selects map information to be updated in accordance with the priority level of the update information. This means that the map creation and delivery means 4 updates the wide area map 8a and any one or more of the detailed maps 9a to 9n corresponding to a newly built road if the update information inputted by the input means 7 corresponds to the newly built road to be classified into any one of the third to fifth rank groups, and updates only any one or more of the detailed maps 9a to 9n corresponding to a newly built road if the update information inputted by the input means 7 corresponds to the newly built road to be classified into any one of the zero to second rank groups. In the present embodiment, the map creation and delivery means 4 and the communication means 6 constitute update information providing means and delivery means for delivering map information.

The input means 7 is designed to read information from a storage medium such as a CD (Compact Disc) or floppy disk (registered trademark). The storage medium has stored therein a program to have the map creation and delivery means 4 implement a function of creating map information based on map database information stored in the map database 3, a function of storing the map information in the map information storage means 5 after having the map information hierarchized in accordance with a size of an area indicated by the map information, a function of updating the map information if the map database information is updated, a function of providing update information from the delivery apparatus to the terminal apparatus, and a function of delivering the map information from the delivery apparatus to the terminal apparatus.

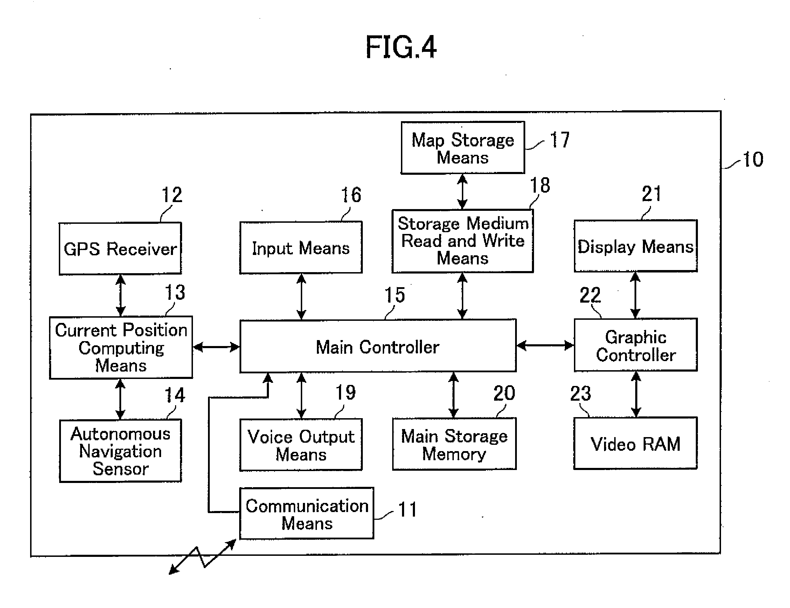

FIG. 4 is a block diagram showing a navigation apparatus 10. The navigation apparatus 10 is mounted in a vehicle. As clearly seen from FIG. 4, the navigation apparatus 10 comprises communication means 11, a GPS (Global Positioning System) receiver 12, current position computing means 13, an autonomous navigation sensor 14, a main controller 15, input means 16, map storage means 17, storage medium read and write means 18, voice output means 19, a main storage memory 20, display means 21, a graphic controller 22, and a video RAM (Random Access Memory) 23.

The communication means (receiving means) 11 is adapted to communicate with the map server 1, receive the dedicated message or the electronic mail from the map server 1, and transmit a request for transmitting map information to the map server 1.

The GPS receiver 12 is adapted to receive radio waves transmitted from a plurality of artificial satellites to detect a current position of the automotive vehicle, and supply detected signals to the current position computing means 13.

The autonomous navigation sensor 14 is constituted by a distance sensor such as a vehicle speed sensor, and a direction sensor such as a gyroscope, and supplies detected signals to the current position computing means 13.

The current position computing means 13 computes the current position of the vehicle based on the detected signals supplied from the GPS receiver 12 and the autonomous navigation sensor 14 and supplies a computed result to the main controller 15. The GPS receiver 12, the current position computing means 13 and the autonomous navigation sensor 14 collectively constitute current position obtaining means.

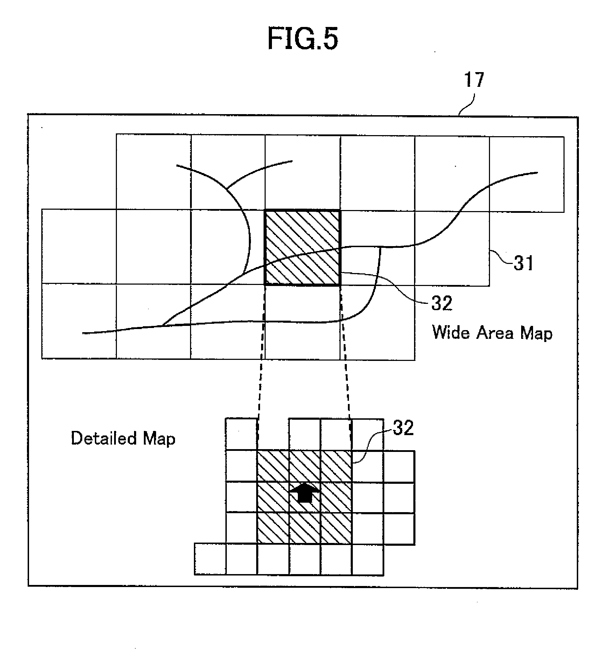

The storage medium read and write means 18 reads map information from the map storage means 17 constituted by a CD, a DVD, or a memory card. The map storage means 17 hierarchically stores therein the map information delivered from the map server 1. As clearly seen from FIG. 5, the map information stored in the map storage means 17 is hierarchized as being divided into a wide area map (higher hierarchy) 31 and a detailed map (lower hierarchy) 32 (in reality, a plurality of detailed maps, not shown), similar to the case of the map information storage means 5.

Further, the storage medium read and write means 18 supplies the map information stored in the map storage means 17 to the main controller 15. The main controller 15 supplies the map information, the current position of the vehicle received from the current position computing means 13, and guide information received by the communication means 11 to the graphic controller 22.

The display means 21 is constituted by a liquid crystal panel and controlled by the graphic controller 22. The graphic controller 22 writes the map information, the current position of the vehicle, and the guide information from the main controller 15 into the video RAM 23, and read information from the video RAM 23 to have the display means 21 display the information.

The input means 16 is constructed by various kinds of operation keys and a remote controller operatively connected with the navigation apparatus 10, and constitutes target destination point setting means for setting a target destination point at arbitrary point on a map indicated by the map information read by the storage medium read and write means 18. Further, the input means 16 constitutes update information specifying means for specifying a detailed map so as to receive the update information if the map information indicative of the specified detailed map is updated in the map information storage means 5, and is adapted to have the map storage means 17 store therein the update specify information indicative of the specified detailed map.

In the present embodiment, the main controller 15 constitutes searching means, and searches a travel route from the current position of the vehicle computed by the current position computing means 13 to the target destination point set by the input means 16 by way of the dijkstra method, superimposes the current position along the travel route, and has the display means 21 display them.

Further, the main controller 15 judges whether a version of map information assigned to the higher hierarchy, located along the travel route, is matched with a version of map information assigned to the lower hierarchy and if the result of judgment is unmatched, the main controller 15 obtains the map information assigned to the lower hierarchy from the map server 1 to have the map information assigned to the lower hierarchy updated.

The voice output means 19 is constituted by a loudspeaker, and outputs acoustic guidance information in accordance with the travel route if the travel route is guided by the main controller 15.

The storage medium read and write means 18 reads information from a storage medium such as a CD-ROM (Compact Disc ROM), a floppy disk (registered trademark). The storage medium has stored therein a program to have the main controller 15 implement a function of obtaining a current position of a vehicle, a function of displaying a map after having the current position superimposed on the map, a function of setting a target destination point on the map, a function of searching a recommended route from the current position to the target destination point, a function of judging whether a version of map information assigned to the higher hierarchy is matched with a version of map information assigned to the lower hierarchy, on the searching route stored in the map storage means, and a function of obtaining the map information assigned to the lower hierarchy from the delivery apparatus to have the map information assigned to the lower hierarchy updated if the result of judgment is unmatched. The program is stored in the main storage memory 20.

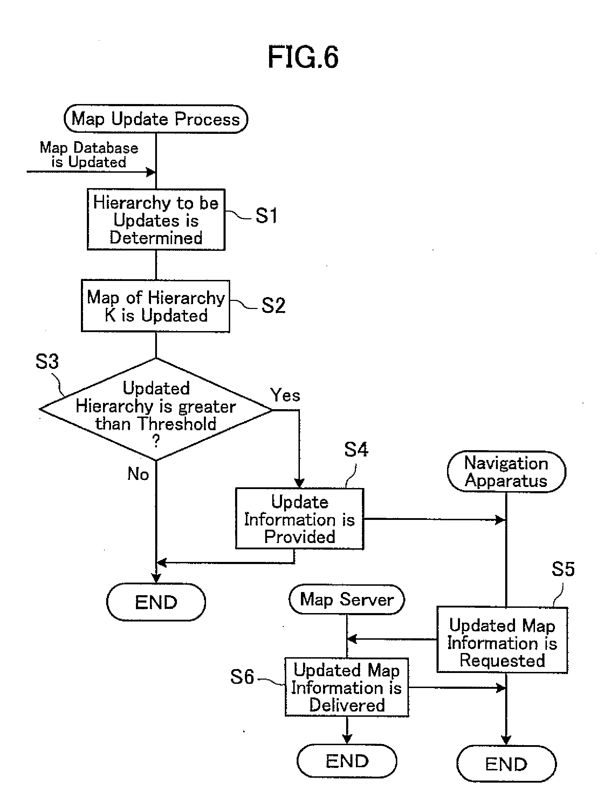

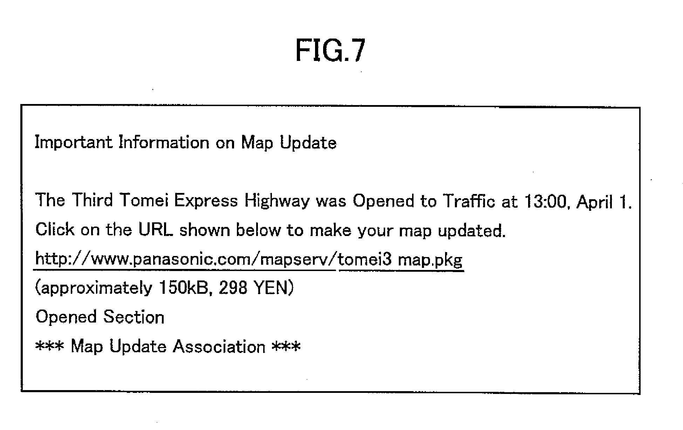

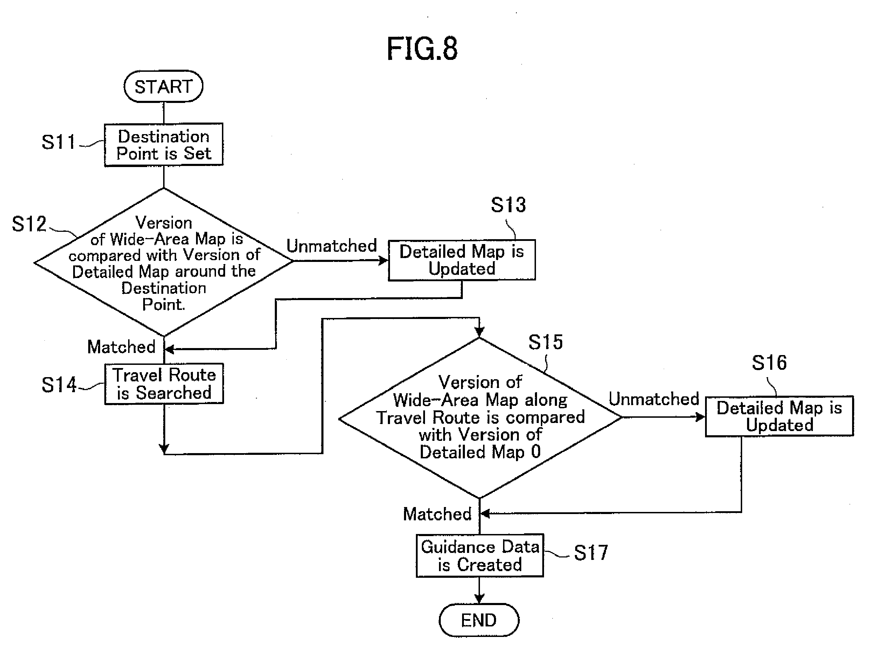

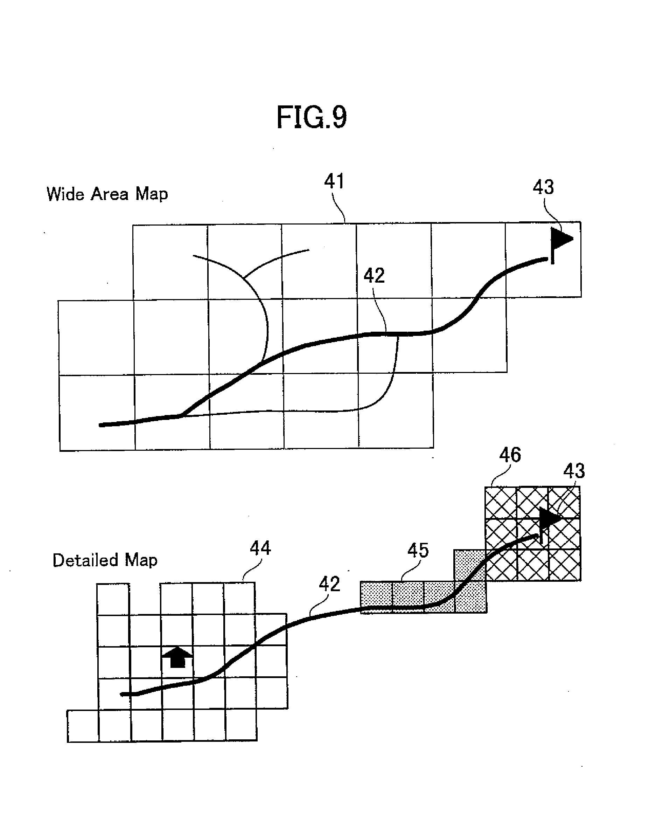

Then, the update method of the map information will be described hereinlater with reference to FIGS. 6 through 11. FIG. 6 is a flow chart explaining processes of updating map information, providing update information, and delivering the map information. The flow chart represents a program executable by the map creation and delivery means 4 to carry out required steps. FIG. 7 is a view showing contents of information provided if the map information is updated. FIG. 8 is a flow chart explaining processes of searching a travel route. FIG. 9 is a view showing a condition of map information to be updated if the travel route is searched.

As clearly shown in FIG. 6, the map server 1 receives update information from the map database 3 if the map database information stored in the map database 3 is updated, and, in return, determines a hierarchy of map information to be updated (step S1). The hierarchy, for example, K of the map information to be updated is determined after repeatedly checking all of the concerned hierarchies from the lowest hierarchy to the highest hierarchy. Further, each of the rank groups is determined for the map information to be updated while the hierarchy of the map information to be updated is determined, so as to determine the extent of each of hierarchies to which the update information would be reflected on the map information. The update information represents, for example, the fifth rank group of road, it is determined that the intercity highway should be updated, and then it is further determined that the map information assigned to the highest hierarchy should be updated.

Then, the map information assigned to the hierarchy K determined in the step S1 is updated (step S2).

It is judged whether or not the updated hierarchy is greater in number than a predetermined threshold value (step S3). The predetermined threshold value is set between the numbers of the lower hierarchy and the higher hierarchy, and if it is judged that the updated hierarchy is equal in number to or less than the threshold value, the procedure is terminated. If, on the other hand, it is judged that the updated hierarchy is greater in number than the threshold value, the update information is recognized as having a wide area priority level and provided to the navigation apparatus 10 (step S4).

In this step of the conventional map update process, all of the map information up to the one assigned to the highest hierarchy is updated regardless of the rank groups of the updated features, thereby resulting in the fact that the map information of the higher hierarchy, which is not required to be updated, is unnecessarily updated if the update information represents only the map information classified into the low rank group. The fact that, in the conventional update processes, the version of all of the map information is unnecessarily updated leads to the fact the map information is thus unnecessarily updated and delivered. In the present embodiment, on the other hand, only the map information classified into the rank groups represented by the update information is updated, thereby preventing information from being unnecessarily updated and the update information from being unnecessarily delivered.

In the step S4 of providing the update information, transmitted is an electronic mail or an updated message, having described therein, for example, information on opening of a highway, and an address of the map server 1 where the map information on the highway is stored. Further, the electronic mail or the updated message may have described therein an identifier representative of an updated point and a hierarchy of the updated point, and an introductory statement of the updated point.

In response to the update information, the navigation apparatus 10 transmits a request for the updated map information to the map server 1 (step S5). Upon receiving the request for the updated map information, the map server 1 delivers the updated map information to the navigation apparatus 10.

Here, the update information on a detailed map may not be provided, resulting from the fact that the update information on a detailed map, in part, may be unnecessary delivered if the update information is delivered to all of the navigation apparatus 10 across the nation since the information included in the detailed map is directed to a particular local area. The description hereinlater will be directed to processes carried out in such a case. It is assumed that map information specified by the update specify information stored in the map storage means 17 forming part of the navigation apparatus 10 provided in a local area is indicative of, for example, a detailed map 32, and the map server 1 is polled by the navigation apparatus 10. The navigation apparatus 10 may judge whether or not the version of the map information indicative of the detailed map 32 stored in the map storage means 17 is matched with the version of the map information indicative of the detailed map 32 stored in the map information storage means 5 forming part of the map server 1, and update the map information indicative of the detailed map 32 stored in the map storage means 17 if it is judged that the map information indicative of the detailed map 32 stored in the map information storage means 5 is updated.

Further, the update specify information may be registered in the map server 1 for each of the navigation apparatuses 10 and, if the map information is updated, the map server 1 may provide update information to the navigation apparatus 10, which has registered in the map server 1 the update specify information indicative of the corresponding map information. The former method is advantageous in that management burdens on the map server 1 are reduced, and the latter method is advantageous in that the amount of communications between the map server 1 and the navigation apparatus 10 is reduced.

The description hereinlater will be directed to processes of searching a travel route. It is, in the present embodiment, assumed that, in the map storage means 17, the map information indicative of detailed maps 45, 46 around a target destination point 43 located in a remote local area is not updated while the map information indicative of a wide area map 41 is maintained updated, and the map information indicative of a detailed map 44 around user's home is maintained updated, as clearly shown in FIG. 9, by the updated map information delivered from the map server 1 in such a manner as described in the above.

In FIG. 8, the input means 16 is firstly operated by a user to set a target destination point (step S11), and it is judged whether the version of the map information indicative of the wide area map 41 including an area having therein the target destination point is matched with the version of the map information indicative of each of the detailed maps 46 around the target destination point 43 (step S12). Alternatively, the map information indicative of the wide area map stored in the map storage means 17 may have included therein precise versions of the map information indicative of detailed maps included in the wide area map, and the version of the map information indicative of each of the detailed maps 46 included in the map information indicative of the wide area map may be compared with the version of the map information indicative of the wide area map stored in the map storage means 17.

In the step S12, if it is judged that the version of the map information indicative of the wide area map 41 is matched with the version of the map information indicative of each of the detailed maps 46, a route search process is carried out (step S14). If it is, on the other hand, judged that the version of the map information indicative of the wide area map 41 is not matched with the version of the map information indicative of each of the detailed maps 46, the map information indicative of each of the detailed maps 46 and other detailed maps is obtained from the map server 1 to have the map information indicative of the detailed maps updated (step S13), and the route search process is carried out. Preferably, the range of the detailed maps to be updated should be matched with the range of areas where the travel route being searched is related.

After a travel route 42 from the starting point to the target destination point 43 is calculated as a result of the route search process carried out in the step S14, it is judged whether the version of the map information indicative of the wide area map having included therein areas along the travel route 42 is matched with the version of each of the map information indicative of the detailed maps having included therein the areas along the travel route 42 (step S 15), if it is judged that the versions are unmatched, the map information indicative of the detailed maps such as detailed maps 45, which respectively include therein the areas along the travel route 42, and have versions unmatched with the map information indicative of the wide area map, is obtained from the map server 1, to have the versions of the map information indicative of the detailed maps updated (step S16), and guidance data is created (S17) to have the display means 21 display the map and voice output means 19 output acoustic guidance information to start guiding the user along the travel route.

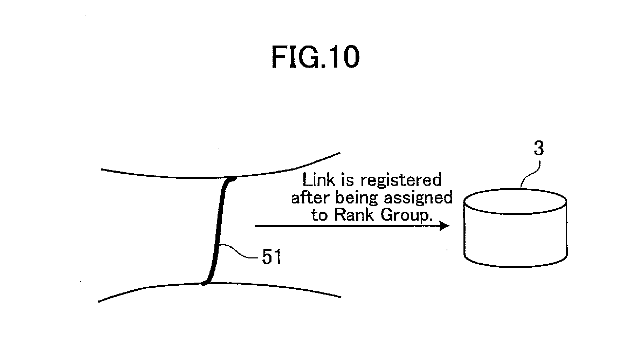

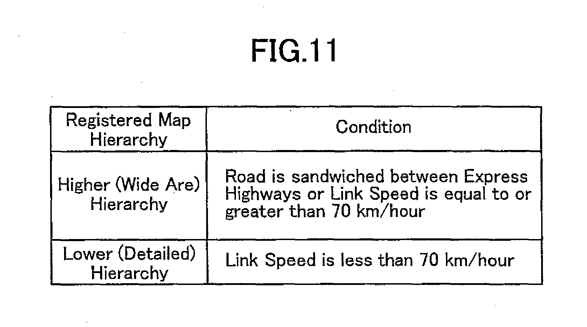

The description hereinlater will be directed to processes of adding to the map database information, which is stored in the map database 3, indicative of a newly built road, if the newly built road was detected, with reference to FIGS. 10 and 11.

For example, in the case that information of an updated road detected by the navigation apparatus 10 is automatically registered in the map database 3 to have the map database information automatically updated, the navigation apparatus 10 cannot exert an effect of customizing an updated area in accordance with the priority level of the update information unless the priority level (rank group) of the updated road is correctly recognized.

As clearly seen from FIG. 10, it is preferably that a link (road) 51 to be newly added is properly assigned to a rank group before being registered in the map database information.

In this case, the current position computing means 13 forming part of the navigation apparatus 10 constitutes update information obtaining means for obtaining update information such as the link 51 to be nearly added, and priority level obtaining means for obtaining a priority level of the update information.

This means that the link to be newly added is assigned to a rank group in accordance with a table shown in FIG. 11 and registered in the map database 3, for example, in the case that the link to be newly added is obtained from travel locus information of the navigation apparatus 10, and the travel locus information includes time information and speed information.

To be more precise, the link to be newly added is assigned to a rank group so as to be included in the map information assigned to the higher hierarchy, and then registered in the map database 3, if the road to be updated is sandwiched between express highways which are classified into the higher hierarchy or if the speed of the link to be newly added (locus) is equal to or greater than 70 km/hour, and the link to be newly added, on the other hand, is assigned to a rank group so as to be included in the map information assigned to the lower hierarchy, and then registered in the map database 3, if the speed of the link to be newly added (locus) is less than 70 km/hour.

As will be seen from the foregoing description, it will be understood that the present embodiment of the map update system according to the present invention can provide important update information to ensure that important information is updated, by providing update information to all of the terminal apparatuses across the nation if the map database information in a wide area is updated, for example, in such a case that an express highway extending a plurality of prefectures is newly built, as well as eliminate the need of unnecessarily updating the map information by updating only the map information assigned to the lower hierarchy if the feature low in a priority level such as a local road located in a local community such as a city or a town is updated, resulting from the fact that the map information created on the basis of the map database information stored in the map database 3 is hierarchized in accordance with a size of an area of the map information, and the update information is provided to the navigation apparatus 10 if the map information assigned to the higher hierarchy or the lower hierarchy but necessary for the navigation apparatus 10 is updated. This leads to the fact that the present embodiment of the map update system according to the present invention can eliminate unnecessarily providing update information as well as unnecessarily updating map information.

Further, the present embodiment of the map update system according to the present invention can update map information without limitation to a specific area, resulting from the fact that the map update system can update map information assigned to the lower hierarchy, located in an area around the home of a user of the navigation apparatus 10, as well as update map information assigned to the higher hierarchy, remotely located from the home of the user of the navigation apparatus 10, resulting from the fact that the navigation apparatus 10 has registered therein the update specify information indicative of a specific map information assigned to the lower hierarchy so as to receive the update information if the specific map information is updated.

In addition, the present embodiment of the map update system according to the present invention makes it possible for the navigation apparatus 10 to detect that the map information is updated, resulting from the fact that the map server 1 provides the update information to the navigation apparatus 10 by means of push type media, thereby ensuring to update the necessary map information.

The present embodiment of the map update system according to the present invention can update the accurate map information while searching a travel route, resulting from the fact that it is judged whether the version of the map information assigned to the lower hierarchy and the version of the map information assigned to the higher hierarchy, stored in the map storage means 17 and located along the searched travel route, are matched with each other while the navigation apparatus 10 is searching the travel route, and if the result of the judgment is unmatched, the map information assigned to the lower hierarchy is obtained form the map server 1 and thus updated. In addition, the present embodiment of the map update system according to the present invention can eliminate the need of unnecessarily updating map information, resulting from the fact that only minimum necessary map information can be updated.

The present embodiment of the map update system according to the present invention can efficiently update the map information, resulting from the fact that, if a feature such as a newly built road is detected, update information indicative of the detected feature and a priority level of the detected feature are inputted, and the map creation and delivery means 4 selects the map information to be updated in accordance with the priority level of the update information.

As will be seen from the foregoing description, it will be understood that the present invention provides a map update system comprising a delivery apparatus which can efficiently update and deliver to a terminal apparatus only necessary map information, resulting from the fact that the map information to be updated is hierarchized in accordance with its area in the map update system.

## Claims

1. A map update system, comprising:
a delivery apparatus for delivering map information created based on map database information to serve as an information source of map information indicative of a map, and
a terminal device for receiving said map information, in which
said delivery apparatus includes
map information storage means for hierarchizing and storing therein said map information in accordance with an area indicated by said map information,
map information update means for updating map information stored in said map information storage means if at least a part of said map database information is updated, and
update information providing means for providing update information to said terminal apparatus in accordance with a hierarchy assigned to said map information updated by said map information update means,
said terminal apparatus includes
receiving means for receiving map information delivered from said delivery apparatus and said update information provided by said update information providing means, and
map storage means for storing therein said map information received by said receiving means.

2. A map update system as set forth in claim 1, in which
said map information includes at least
a higher hierarchy to be assigned to map information indicative of a map of a whole area or a wide area in relation to said map database information, and
a lower hierarchy to be assigned to map information indicative of an area contained in said map to be indicated based on said map information assigned to said higher hierarchy, and
said update information providing means is operative to provide said update information to said terminal apparatus at least if said map information assigned to said higher hierarchy is updated by said map information update means.

3. A map update system as set forth in claim 2, in which
said update information providing means is operative to provide said update information in accordance with said terminal apparatus at least if said map information assigned to said lower hierarchy is updated by said map information update means.

4. A map update system as set forth in claim 3, in which
said terminal apparatus includes update information specifying means for specifying map information assigned to said lower hierarchy so as to receive said update information at least if said specified map information is updated by said map information update means.

5. A map update system as set forth in claim 3, in which
said terminal apparatus includes current position obtaining means for obtaining a current position of a moving object, target destination point setting means for setting a target destination point of said moving object, and searching means for searching a recommended route from said current position to said target destination point,
said map information storage means is operative to hierarchize and store therein said map information after having said map information hierarchized into at least said higher hierarchy and said lower hierarchy, and
said searching means is operative to judge whether a version of map information assigned to said higher hierarchy is matched with a version of map information assigned to said lower hierarchy, on said searching route, and if the result of judgment is unmatched, said searching means is operative to obtain said map information assigned to said lower hierarchy from said delivery apparatus to have said map information assigned to said lower hierarchy updated.

6. A map update system as set forth in claim 1, in which
if at least a part of said map database information is updated, said map information update means is operative to update map information assigned to one of hierarchies, whichever corresponds to said updated part.

7. A map update system as set forth in claim 6, in which
said terminal apparatus includes update information obtaining means for obtaining update information to be used for updating said map database information, and priority level obtaining means for obtaining a priority level of said update information, and
said map information update means is operative to select map information to be updated based on said priority level of said update information if at least said map database information is updated based on said update information.

8. A map update system as set forth in claim 1, in which
said update information providing means is operative to provide said update information to said terminal apparatus by means of push type media.

9. A map update method of updating map information created based on map database information to serve as an information source of map information indicative of a map, and delivered to a terminal apparatus, said method comprises the steps of:
hierarchizing and storing therein said map information in accordance with an area indicated by said map information,
updating said map information if at least a part of said map database information is updated, and
providing update information to said terminal apparatus in accordance with a hierarchy assigned to said updated map information.

10. A delivery apparatus for delivering map information created based on map database information to serve as an information source of map information indicative of a map to a terminal apparatus, comprising:
map information storage means for hierarchizing and storing therein said map information in accordance with an area indicated by said map information;
map information update means for updating map information stored in said map information storage means if at least a part of said map database information is updated; and
update information providing means for providing update information to said terminal apparatus in accordance with a hierarchy assigned to said map information updated by said map information update means.

11. A terminal apparatus for receiving map information indicative of a map from a delivery apparatus, comprising:
map storage means for hierarchizing and storing therein said map information after having said map information hierarchized into at least into a higher hierarchy and a lower hierarchy;
current position obtaining means for obtaining a current position of a moving obj ect;
target destination point setting means for setting a target destination point of said moving object, and
searching means for searching a recommended route from said current position to said target destination point, and in which
said searching means is operative to judge whether a version of map information assigned to said higher hierarchy is matched with a version of map information assigned to said lower hierarchy, on said searching route, and if the result of judgment is unmatched, said searching means is operative to obtain said map information assigned to said lower hierarchy from said delivery apparatus to have said map information assigned to said lower hierarchy updated.

12. A storage medium having stored therein a program readable by a computer for delivering map information created based on map database information to serve as an information source of map information indicative of a map to a terminal apparatus to have said computer implement:
a function of hierarchizing and storing therein said map information in accordance with an area indicated by said map information;
a function of updating map information stored in said map information storage means if at least a part of said map database information is updated, and
a function of providing update information to said terminal apparatus in accordance with a hierarchy assigned to said updated map information.

13. A storage medium having stored therein a program readable by a computer for receiving map information indicative of a map from a delivery apparatus to have said computer implement:
a function of hierarchizing and storing therein said map information after having said map information hierarchized into at least into a higher hierarchy and a lower hierarchy;
a function of obtaining a current position of a moving object;
a function of setting a target destination point of said moving object,
a function of searching a recommended route from said current position to said target destination point,
a function of judging whether a version of map information assigned to said higher hierarchy is matched with a version of map information assigned to said lower hierarchy, on said searching route, and
a function of obtaining said map information assigned to said lower hierarchy from said delivery apparatus to have said map information assigned to said lower hierarchy updated if the result of judgment is unmatched.
